# EUROPEAN PATENT SPECIFICATION

(11) **EP 3 932 187 B1**
(45) Date of publication and mention of the grant of the patent: **20.08.2025**
(21) Application number: 21183058.3
(22) Date of filing: 01.07.2021
(51) Int. Cl.: A01G 9/22, A01G 13/21, D03D 1/00, D03D 15/283, D03D 15/46, D03D 19/00

(54) **LENO WOVEN FABRIC WITH ALTERNATED MONOFILAMENT AND STRIP**
DREHERGEWEBE MIT ALTERNIERENDEM MONOFILAMENT UND BAND
TISSU GAZE AVEC ALTERNANCE DE MONOFILAMENTS ET DE BANDES

(30) Priority: 03.07.2020 IT 202000016108
(43) Date of publication of application: 05.01.2022
(73) Proprietor: ARRIGONI S.p.A., Uggiate-Trevano (CO) (IT)
(72) Inventor: STARACE, Giuseppe, 70122 BARI (IT); ARRIGONI, Paolo, 22029 Uggiate Trevano (CO) (IT); LIPPOLIS, Marco, 70017 Putignano (BA) (IT)
(74) Representative: Conversano, Gabriele

(56) References cited:
- WO-A1-2017/068563
- BE-A3- 1 009 448
- JP-A- 2020 005 576
- KR-B1- 101 412 397
- KR-B1- 102 071 226

## Description

The present Patent application relates to a net for crops protection.

In particular, the present invention relates to a crops protection net which combines good mechanical resistance and dimensional stability with optimal light scattering capacity and various possibilities of shading.

### State of the art

At the state of the art, there are known various embodiments for crops protection nets and with various weave patterns.

It is to be specified that in the present document, it is referred to nets realized in plastic material and:
- for monofilament it is intended a yarn obtained by extrusion, with any section, for example a round, elliptical or polygonal section;
- for band it is intended a polyethylene strip obtained by cutting a polyethylene film;
- for "English turn Leno weave" - in the meaning yet known on the market - it is intended a weave whose weft - realized with monofilaments or bands - passes inside warp yarns (or generally filaments), formed each by two yarns rolled (i.e. twisted) after each weft passage.

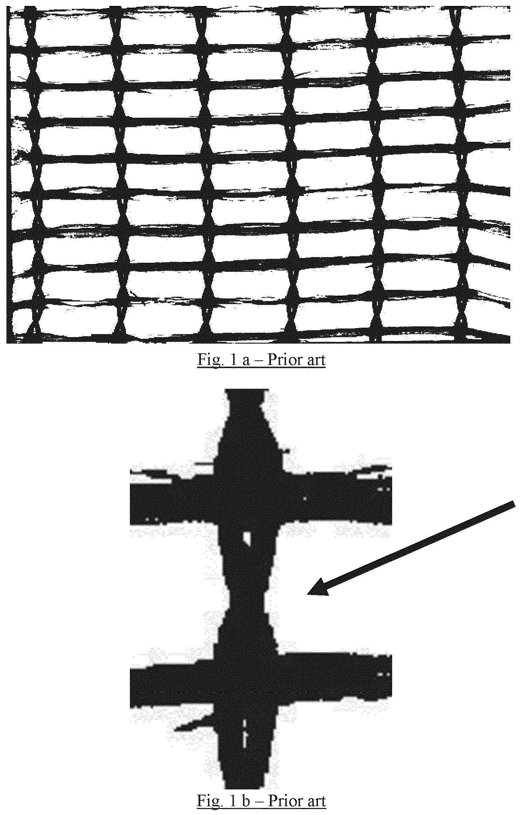

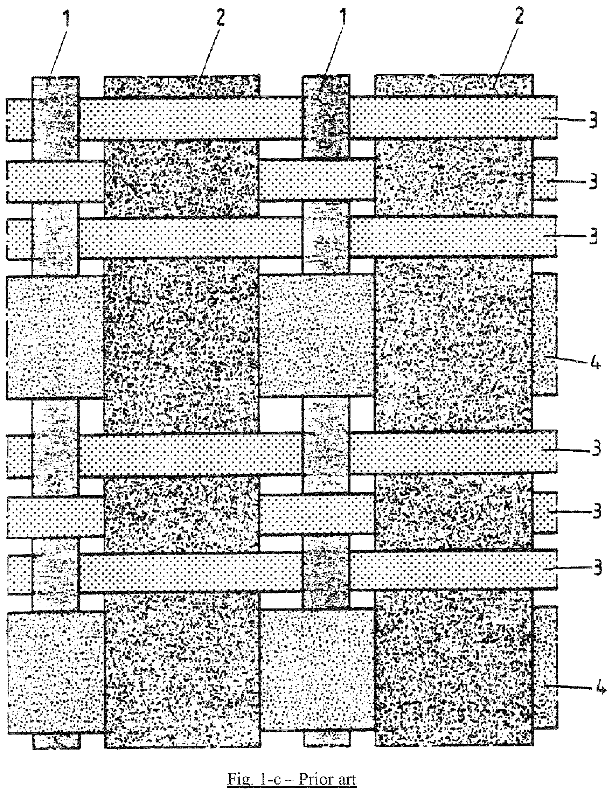

An example of "English turn Leno weave" of the type known at the state of the art is shown in figure 1, where it is possible to see the path of the (vertical) warp yarns interlacing after each (horizontal) weft yarn.

In the enlarged figure 1-b it is shown a detail of the net shown in figure 1-a, where the arrow indicates the point where two warp yarns are interlaced in the passage between a weft yarn and the next one.

In particular, concerning the present application, at the state of the art there are known and are available on the market "English turn Leno weave" whose weft is realized in monofilament, mainly used as hail protection nets, as well as "English turn Leno weave" whose weft is realized with band (proposed as shading).

Anyway, the first ones have low shading capacity (in relation to net weight and costs) and low light scattering capacity; the second ones, instead, have low mechanical resistance and low dimensional stability, even if they good shading capacity.

Figure 1-c shows another embodiment known at the state of the art, described in document BE1009448.

The net described in BE1009448 is provided with alternated warp bands of various width (3, 4) and weft bands (1, 2) of various width. Anyway, this is not an "English turn Leno weave" but a flat weave net. In fact, the warp band (3) twisting is never observed. Moreover, in such document, it is described that the thin warp bands (3) are necessarily interposed in odd number compared with the wide warp bands (4).

This flat net, even if it has a variable shading capacity as a function of the dimensions of the used bands, it is not provided with the mechanical stability given to the "English turn Leno weaves" by the warp yarns twisting.

Moreover, with equal shading capacity the surface weight of a net of the just described type is higher.

Another type of net provided with periodically alternated bands with various thickness is described in JP 2020005576. Also in this document a flat net is described, which is not woven by "English turn Leno weave" technique, realized in order to have a shading function. The net described in this document is realized only in transparent monofilament (both for weft and warp), and in the following some shading strips are applied thereto, which do not contribute to the net mechanical resistance. It is clear that the separation of mechanical resistance and shading does not allow to optimize the net resistance compared to the weight of the material used.

Other kinds of net are disclosed in documents KR101412397 (which discloses a net which is coated, on both surfaces with a LDPE film), JP2020005576 (which discloses a thermal insulation net), WO2017/068563 (which discloses a knitted net for crop protection) and KR102071226 (which discloses a shading net with high wind resistance).

### Aim of the invention

Therefore, aim of the present invention is to provide a net for crops protection which overcomes the limits linked to the nets known at the state of the art. More in particular, the invention provides a net for crops protection which combines good mechanical resistance and good dimensional stability with high shading capacity.

Yet, the present invention provides a net for crops protection which can be produced in various models, provided with various shading capacities.

Yet, according to another aim, the present invention provides a net for crops protection which combines all the just described advantages with a high light scattering capacity as well.

### Brief description of the invention

The present invention realizes the prefixed aims since the flat net is achieved according to claim 1.

### Detailed description of the invention

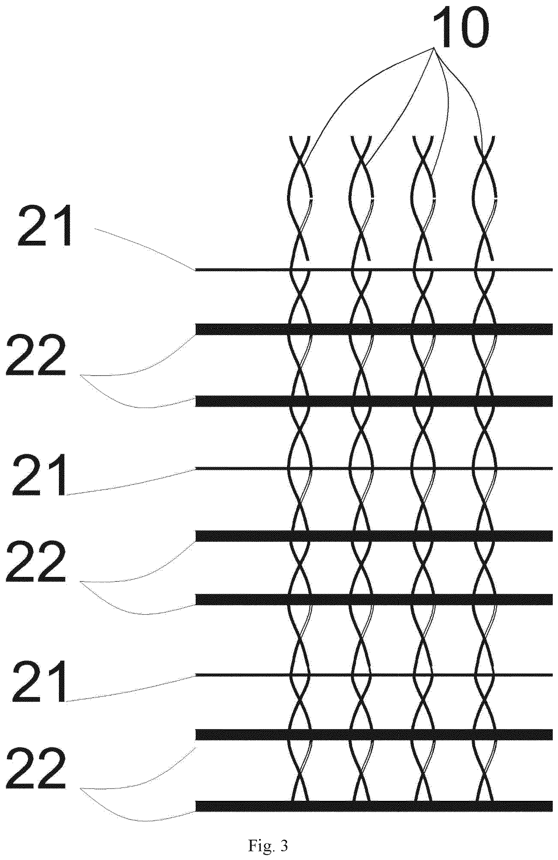

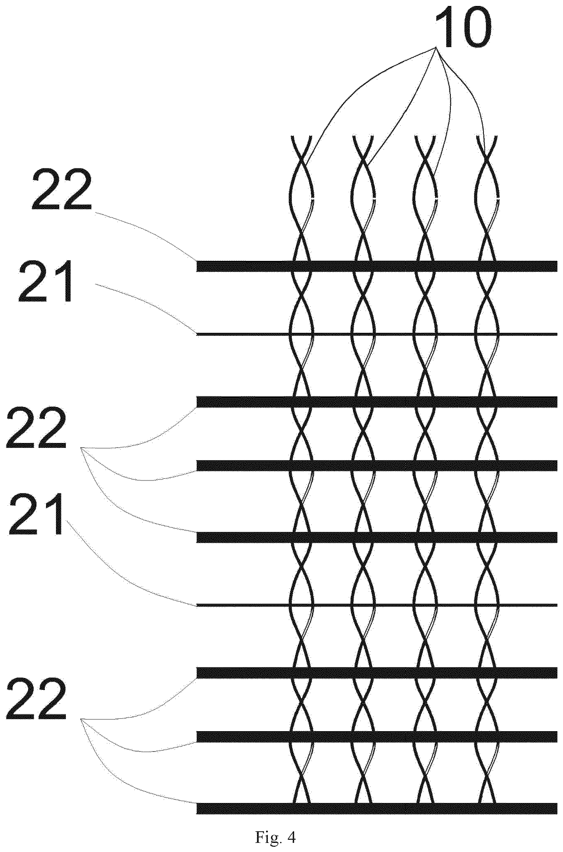

The net will be described in the following with reference to the appended figures 1 to 4. Figure 1-a shows an "English turn Leno weave" of the type known at the state of the art, figure 1-b shows an enlargement of Figure 1-a in which it is clear the warp yarns twisting, Figure 1-a shows a flat net known at the state of the art.

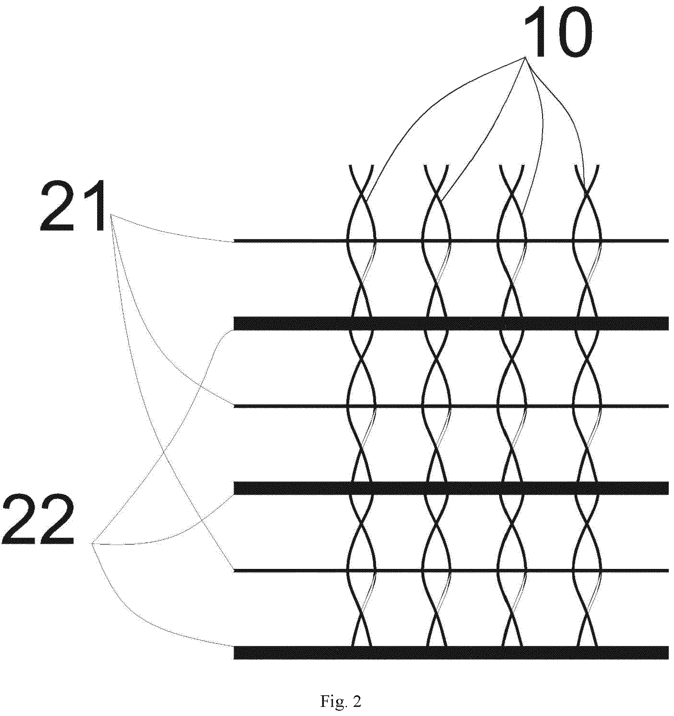

Figures 2, 3 and 4 show three embodiments of the net according to the invention in which a weft in monofilament is alternated with 1, 2 and 3 wefts in band, respectively.

With reference to the appended figures, the net according to the invention is a net in polyethylene for crops protection, realized by "English turn Leno weave" technique and comprising a plurality of weft yarns realized in monofilament (21) and a plurality of weft yarns realized in band (22), said weft yarns in monofilament (21) and said weft yarns in band (22) being periodically alternated with each other.

In a first embodiment, which is not according to the invention, the net provides a weft yarn in monofilament (21) and a weft yarn in band (22) periodically alternated with each other.

In a second embodiment which is not according to the invention, the net provides two weft yarns in monofilament (21) and two weft yarns in band (22) periodically alternated with each other.

According to the invention, the net provides a weft yarn in band periodically alternated with each "n" weft yarns in monofilament, as a function of the desired shading capacity.

Preferably, the polyethylene for the realization of the net (bands) is suitably additivated in order to increase its light scattering capacity.

It is now described a preferred embodiment of the net according to the invention.

It is a net produced by flat weaving (by means of projectile looms, gripper looms or shuttle looms) with "English turn Leno weave" technique and comprising warp (10) realized in monofilament. The warp yarns title is between 150 den and 1000 den. The section of the warp monofilaments is preferably circular, but also sections of other type, as for example elliptical, hexagonal, lozenge or star shaped, are possible.

The weft is provided with periodically alternated monofilament and bands.

In a first embodiment which is not according to the invention, the weft can have a 1:1 monofilament to bands alternance ratio, but according to the invention, other ratios, such as for example 2 bands for each monofilament, or 3 bands for each monofilament are provided, in order to satisfy various shading needs.

In further embodiments not in accordance with the invention, alternance ratios such as a band each 2 monofilaments, a band each three monofilaments and so on are also possible.

Another important feature of the nets produced according to the invention is that they are woven by means of a loom adjusted so that warp does not grip bands during weaving, and so that bands remain in their flat configuration while passing inside a warp plait. This allows to exploit the whole surface of bands for shading purposes.

The title of the bands used is preferably between 300 den and 1200 den.

The thickness of the bands used is preferably between 15 and 50 micrometers, in order to obtain sufficient mechanical resistance features and to maximize the effect of light scattering at the same time. Preferably, moreover, the bands are wide between 2 and 3 mm.

Moreover, it is to be specified that the meshes of the net according to the invention can be realized in various dimensions. Preferably, the net according to the invention is realized with large weaving meshes, this meaning meshes with dimensions between 3 mm x 2 mm and 9.5 mm x 5 mm.

It is to be specified that the mesh is defined by the dimensions of the distance between two following warps and the dimensions of the distance between two following wefts.

Moreover, it is clear that the net according to the invention can be produced in any dimension according to what known at the state of the art.

Typically, looms allow to realize nets with height between 2.5 cm and 6 cm and any length. Anyway, by means of sewing and cutting operations known at the state of the art, it is possible to realize nets of any dimension.

Preferably, bands are in translucid white polyethylene in order to increase the net light scattering properties. Yet, more preferably in filming step (i.e. when the film is realized from which the bands to be used for the weft are cut), at least an additive is added to polyethylene, which is able to absorb infrared rays and to increase the light scattering effect.

According to a preferred embodiment, the additive is a mineral additive chosen among carbonates (calcite, dolomite, anchorite, magnesite, rhodochrosite), sulphates (alunite, jarosite, calcium sulphate), phyllosilicates (clays, chlorites), hydroxylated silicates (heptode, amphibole) used in percentages lower than 10% with respect to the composition. According to a preferred embodiment, the additive used comprises calcite and is provided in the composition of yarn and band in wt% lower than 10% and preferably between 4 and 6%.

After describing the characteristics of the net according to the invention, it is possible to highlight now the effects of such characteristics, and so the advantages compared to the types of nets known at the state of the art.

*In primis,* it is to be specified that the usage of a flat net (woven by means of the "English turn Leno weave" technique) comprising a portion of wefts realized in monofilament allows to obtain good dimensional stability.

In other terms, thanks to the weaving technique the phenomenon of side shrinkage upon longitudinal stretching, observed in nets woven by means of other techniques, is not observed.

Moreover, the "English turn Leno weave" allows mesh stability even when very few yarns are provided per cm², while nets with few yarns per cm² do not remain together and are extremely fragile.

The net according to the invention can be realized also with 5 yarns per cm² (dimension corresponding to a 9.5 x 5 mm mesh). According to another example, the net according to the invention can be realized with a 3 mm x 2 mm mesh, equal to 9 yarns per cm². Moreover, in "English turn Leno weave" it is observed that the weft is substantially not extendible, considering that it is yet completely extended, and so a deformation in its direction would meet the resistance of a yarn yet extended at its maximum.

It is also observed that if an "English turn Leno weave" is realized (as it is known at the state of the art as well) with weft yarns realized only in band (i.e. without alternated weft yarns in monofilament) the fabric softness in weft direction is reduced sensibly.

This means that it is easy to make the various warp spirals come closer to each other. If instead wefts in monofilament (alternated with bands) are provided, the "hand" of the fabric varies sensibly. It is to be specified, if needed, that "hand" in textile field is the technical term indicating softness and volume evaluated by the tactile perception given by a fabric, a jersey or a yarn. With regards to fabrics, it helps to describe the peculiar features given by the combination of two factors: the peculiarities of the yarn (material used and type of working) linked to the weave effect (texture of the yarns).

During the tests for the development of the present invention, it was observed that the provision of wefts in monofilament, yet starting from their provision for a monofilament each three bands, gives the fabric a shape stability, which needs rigidity for agricultural uses.

It is to be considered in fact that in the agricultural usage it is needed a high precision of the fabric dimensions definition. Since great fields are covered, if there was no dimensional stability in both terms, small dimensional errors summed up on great extensions would lead to remarkable absence of fabric (or as an alternative, to significant excesses).

Yet, the "English turn Leno weave" according to the present invention keeps the band extended also when the same crosses the warp yarns crossing, and this allows to exploit better the band for shading and light scattering purposes.

Moreover, the usage of a wide mesh net allows very much margin to modulate the ratio between empty area and full area by means of monofilament and band alternance.

It is to be specified that in the systems known at the state of the art, a net with only one monofilament with a mesh similar to the one provided for the inventive net has a 18% maximum full area.

Yet, the alternance of weft yarns realized in monofilament and weft yarns realized in band allows to have both the advantage of rigidity and resistance of the net in transversal direction (given by the usage of wefts in monofilament), and the possibility to have good shading and light scattering values (obtained by using bands).

In fac, the band is useful to obtain a wide covered surface (full area) of the net, containing at the same time the weight per square meter. The wide surface covered is needed to allow the transition from direct radiation to diffused radiation of a greater quantity of light, thus coming closer in this way to the effect obtained by means of a plastic film, yet keeping the advantages deriving from the usage of a net (air exchange, water passage in case of rain, even if slowed down by the net) .

## Claims

1. Flat net in polyethylene for crops protection, produced by "English turn Leno weave" technique and comprising:
- a plurality of weft yarns (21, 22),
- a plurality of warp yarns (10), associated in couples to each other and configured so that each one of said couples is twisted after each passage of each weft yarn,
**characterized in that**
said plurality of weft yarns comprises
- a plurality of weft yarns realized in monofilament (21) and
a plurality of weft yarns realized in band (22),
said weft yarns realized in monofilament (21) and said weft yarns realized in band (22) being periodically alternated with each other
and **in that**
said weft yarns in monofilament (21) and said weft yarns in band (22) are alternated for a weft yarn realized in monofilament with each "n" weft yarns in band, "n" being at least 2, as a function of the desired shading capacity.

2. Net in polyethylene for crops protection according to claim 1,
**characterized in that** the polyethylene for the realization of said weft yarns in band (22) is additivated by addition of at least an additive, which is able to absorb infrared rays and to increase the light scattering effect.

3. Net in polyethylene for crops protection according to claim 2,
**characterized in that** said at least one additive is a mineral additive chosen among carbonates (calcite, dolomite, anchorite, magnesite, rhodochrosite), sulphates (alunite, jarosite, calcium sulphate), phyllosilicates (clays, chlorites), hydroxylated silicates (heptode, amphibole) used in percentages lower than 10%.

4. Net in polyethylene for crops protection according to claim 3,
**characterized in that** said additive comprises calcite and is provided in wt% lower than 10% and preferably between 4 and 6%.

5. Net in polyethylene for crops protection according to any one of the preceding claims, **characterized in that** said weft yarns in band (22) are realized in translucid white polyethylene in order to increase the net light scattering properties.

6. Net in polyethylene for crops protection according to any one of the preceding claims, **characterized in that** it is woven so that warp (10) does not grip said weft yarns in band (22) and so that the same remain in a substantially flat configuration while passing inside each warp plait (10).

7. Net in polyethylene for crops protection according to any one of the preceding claims, **characterized in that** the thickness of said weft yarns in band (22) is between 15 and 50 micrometers, in order to obtain sufficient mechanical resistance features and to maximize the effect of light scattering at the same time.

8. Net in polyethylene for crops protection according to any one of the preceding claims, **characterized in that** it is realized with a number of yarns per cm² between 5 and 9.

## Patentansprüche

1. Flaches Netz aus Polyethylen zum Schutz von Pflanzen, hergestellt mit "English turn Leno weave"-Technik und umfassend
- eine Vielzahl von Schussfäden (21, 22),
- eine Vielzahl von Kettfäden (10), die paarweise miteinander verbunden und so konfiguriert sind, dass jedes von solchen Paaren nach jedem Schussfadendurchgang verdreht wird,
**dadurch gekennzeichnet, dass**
die Vielzahl von Schussfäden umfasst
- eine Vielzahl von Schussfäden in Monofilament (21) gefertigt und
eine Vielzahl von Schussfäden in Band (22) gefertigt,
wobei sich die Schussfäden in Monofilament (21) gefertigt und die Schussfäden in Band (22) gefertigt periodisch abwechseln, und dass
die Schussfäden in Monofilament (21) und die Schussfäden in Band (22) für einen Schussfaden in Monofilament mit jeweils "n" Schussfäden im Band abwechseln, wobei "n" mindestens 2 ist, abhängig von die gewünschte Beschattungsfähigkeit.

2. Netz aus Polyethylen zum Schutz von Pflanzen nach Anspruch 1, **dadurch gekennzeichnet, dass** das Polyethylen zur Herstellung der Schussfäden im Band (22) mit mindestens einem Additiv versehen ist, das Infrarotstrahlen absorbieren und das Lichtstreuungseffekt erhöhen kann.

3. Netz aus Polyethylen zum Schutz von Pflanzen nach Anspruch 2, **dadurch gekennzeichnet, dass** das mindestens eine Additiv ein mineralisches Additiv ist, ausgewählt aus Carbonaten (Kalzit, Dolomit, Anchorit, Magnesit, Rhodochrosit), Sulfaten (Alunit, Jarosit, Calciumsulfat), Schichtsilikaten (Ton, Chlorite) und hydroxylierten Silikaten (Heptode, Amphibol) in Anteilen unter 10 %.

4. Netz aus Polyethylen zum Schutz von Pflanzen nach Anspruch 3, **dadurch gekennzeichnet, dass** das Additiv Kalzit enthält und in einem Gewichtsanteil von weniger als 10 %, vorzugsweise zwischen 4 und 6 %, vorliegt.

5. Netz aus Polyethylen zum Schutz von Pflanzen nach einem der vorhergehenden Ansprüche, **dadurch gekennzeichnet, dass** die Schussfäden im Band (22) aus transluzentem, weißem Polyethylen bestehen, um die Lichtstreuungseigenschaften des Netzes zu verbessern.

6. Netz aus Polyethylen zum Schutz von Pflanzen nach einem der vorhergehenden Ansprüche, **dadurch gekennzeichnet, dass** es so gewebt ist, dass die Kette (10) die Schussfäden im Band (22) nicht ergreift und diese beim Durchlaufen jeder Kettlitze (10) im Wesentlichen flach bleiben.

7. Netz aus Polyethylen zum Schutz von Pflanzen nach einem der vorhergehenden Ansprüche, **dadurch gekennzeichnet, dass** die Dicke der Schussfäden im Band (22) zwischen 15 und 50 Mikrometern liegt, um eine ausreichende mechanische Festigkeit zu gewährleisten und gleichzeitig den Lichtstreuungseffekt zu maximieren.

8. Netz aus Polyethylen zum Schutz von Pflanzen nach einem der vorhergehenden Ansprüche, **dadurch gekennzeichnet, dass** es mit einer Fadenanzahl pro cm² zwischen 5 und 9 hergestellt ist.

## Revendications

1. Filet plat en polyéthylène pour la protection des cultures, fabriqué selon la technique du « tissage Leno à tour anglais » et comprenant :
- une pluralité de fils de trame (21, 22),
- une pluralité de fils de chaîne (10), associés par paires les uns avec les autres et configurés de manière à ce que chaque paire soit retordue après chaque passage de chaque fil de trame,
**caractérisé en ce que**
ladite pluralité de fils de trame comprend
- une pluralité de fils de trame réalisés en monofilament (21) et
une pluralité de fils de trame réalisés en bande (22), lesdits fils de trame réalisés en monofilament (21) et lesdits fils de trame réalisés en bande (22) étant alternés périodiquement les uns avec les autres
et **en ce que**
lesdits fils de trame en monofilament (21) et lesdits fils de trame en bande (22) sont alternés pour un fil de trame réalisé en monofilament, chaque fois avec « n » fils de trame en bande, « n » étant au moins égal à 2, en fonction du pouvoir d'ombrage souhaité.

2. Filet en polyéthylène pour la protection des cultures selon la revendication 1, **caractérisé en ce que** le polyéthylène pour la réalisation desdits fils de trame en bande (22) est additivé par l'ajout d'au moins un additif, qui est capable d'absorber les rayons infrarouges et d'augmenter l'effet de diffusion de la lumière.

3. Filet en polyéthylène pour la protection des cultures selon la revendication 2, **caractérisé en ce que** ledit au moins un additif est un additif minéral choisi parmi les carbonates (calcite, dolomite, anchorite, magnésite, rhodochrosite), les sulfates (alunite, jarosite, sulfate de calcium), les phyllosilicates (argiles, chlorites), les silicates hydroxylés (heptode, amphibole) utilisés en pourcentages inférieurs à 10 %.

4. Filet en polyéthylène pour la protection des cultures selon la revendication 3, **caractérisé en ce que** ledit additif comprend de la calcite et est présent en une quantité en poids inférieure à 10 % et de préférence comprise entre 4 et 6 %.

5. Filet en polyéthylène pour la protection des cultures selon l'une quelconque des revendications précédentes, **caractérisé en ce que** lesdits fils de trame en bande (22) sont réalisés en polyéthylène blanc translucide afin d'augmenter les propriétés de diffusion de la lumière du filet.

6. Filet en polyéthylène pour la protection des cultures selon l'une quelconque des revendications précédentes, **caractérisé en ce qu'**il est tissé de manière à ce que la chaîne (10) n'agrippe pas lesdits fils de trame en bande (22) et ainsi que ceux-ci restent dans une configuration sensiblement plate lors de leur passage à l'intérieur de chaque tresse de chaîne (10).

7. Filet en polyéthylène pour la protection des cultures selon l'une quelconque des revendications précédentes, **caractérisé en ce que** l'épaisseur desdits fils de trame en bande (22) est comprise entre 15 et 50 micromètres, afin d'obtenir une résistance mécanique suffisante et de maximiser simultanément l'effet de diffusion de la lumière.

8. Filet en polyéthylène pour la protection des cultures selon l'une quelconque des revendications précédentes, **caractérisé en ce qu'**il est réalisé avec un nombre de fils par cm² compris entre 5 et **9.**
